# EUROPEAN PATENT SPECIFICATION

(11) **EP 1 179 702 B1**
(45) Date of publication and mention of the grant of the patent: **11.04.2007**
(21) Application number: 00116975.4
(22) Date of filing: 08.08.2000
(51) Int. Cl.: F17C 1/12, F17C 1/00, F17C 5/02, F17C 5/06, F17C 13/00, B01J 3/04, B01J 19/02, C01B 3/00

(54) **Storage tank for a gaseous medium**
Speicherbehälter für gasförmige Medien
Réservoir de stockage de fluide gazeux

(43) Date of publication of application: 13.02.2002
(73) Proprietor: NuCellSys GmbH, 73230 Kirchheim/Teck-Nabern (DE)
(72) Inventor: Blaszczyk, Janusz, Richmond, BC, V7C 5R8 (CA)
(74) Representative: Finkele, Rolf

(56) References cited:
- EP-A- 0 425 098
- DE-C- 19 704 362
- FR-A- 2 351 349
- US-A- 4 751 058

## Description

The invention relates to a storage tank for a gaseous medium in accordance with the preamble of the independent claim 1. Such a storage tank is known from document EP-A-4 250 98.

DE 42 12 626 A1 discloses a storage tank for liquid hydrogen. A pump mounted inside the tank extends from the liquid containing volume to the hydrogen gas containing volume of the tank. An evaporation heater is provided in the gas containing volume or inside the pump. Liquid hydrogen is pumped into the gas containing volume and is evaporated inside the pump or the gas room until the hydrogen gas pressure reaches a nominal pressure value, e.g. 5 bar. At pressure values above the nominal pressure value the pump stops until the pressure drops under the nominal value. On order to prevent slopping and mixing of gaseous and liquid hydrogen due to rapid movements of the tank, e.g. when mounted in a vehicle, several metal sheets are arranged vertically and parallel to each other.

The invention is based on the object of specifying a storage tank for a medium which is capable of storing a gaseous medium and where simpler filling stations can be used.

This object is achieved in the case of a storage tank having the features of Claim 1.

The storage tank according to the invention comprises a storage tank for a gaseous high pressure medium in fluid connection with an evaporating tank for a liquid phase of said medium wherein first inlet and outlet means is provided for filling or discharging said gaseous medium into or out of said first tank and second inlet and outlet means is provided for filling or discharging said liquid medium into or out of said second tank.

The storage tank according to the invention combines the simplicity of a storage system for a high pressure compressed gaseous medium and the advantages of cryogenic liquid medium filling method at more or less ambient pressure. The invention is especially advantageous for hydrogen.

In a preferred embodiment the tank is part of a motor vehicle propelled by a hydrogen combustion engine or a fuel cell system.

Another advantage resides in the fact that the tank can be filled either with cryogenic liquid, preferrably at ambient or moderate pressure, or with gaseous medium, preferrably at high pressure.

It is favourable that, if part of a vehicle, the vehicle can provide one tank either for gaseuos or for liquid fuel. Therefore, the use of such a vehicle is not restricted to the access to a specified kind of filling stations.

Further advantages and refinements of the invention emerge from the rest of the claims and the description.

The invention is explained in more detail below with reference to a drawing, in which:
- Figure 1: shows a first preferred embodiment of a storage tank according to the invention with two containers for a gaseous and a liquid medium.
- Figure 2: shows a cross section of said first preferred embodiment of a storage tank according to the invention.

The invention can be advantageously used in motor vehicles where hydrogen is used as a fuel in a combustion motor or in fuel cell vehicles as fuel for a fuel cell system but is not restricted to an automotive application. The tank is also suitable for low pressure cryogenic filling and high pressure storage of other cryogenic media than hydrogen.

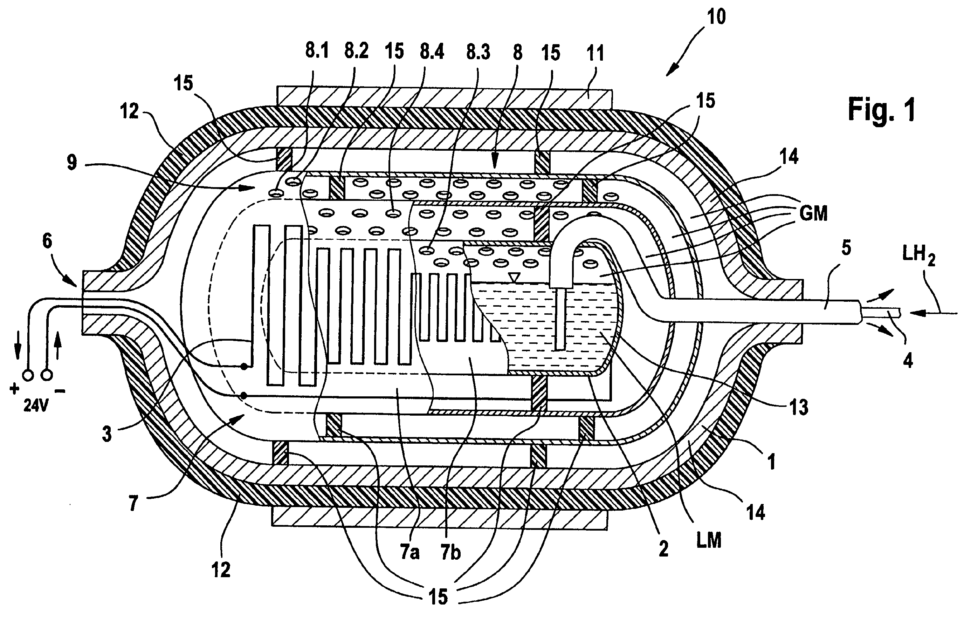

Figure 1 illustrates a preferred hydrogen tank system.

The tank 10 comprises a first vessel 1 with a first vessel wall 14 for compressed gaseous hydrogen GM. The gaseous hydrogen is stored at high pressures of at least 100 bar, preferably more than 300 bar, and a second tank 2 for liquid hydrogen LM. The outer wall 14 of the first tank 1 is preferably at ambient temperature whereas the outer wall 13 of the second vessel 2 is preferably at liquid hydrogen temperatures.

The tank 10 has preferrably two fuelling inlets, one inlet/outlet means 6 for compressed hydrogen GM connected to the first vessel 1 and one inlet/outlet 4, 5 in the first vessel 1 for liquid hydrogen LM connected with the second vessel 2. The inlet/outlet means 4, 5 and 6 can be arranged on opposite sides of the tank 10 or on the same side of the tank 10 or perpendicular to each other. The inlet/outlet means 4, 5 for the liquid medium LM consists preferably of two concentric pipes with an inlet pipe 4 and an outlet pipe 5 (or vice versa).

The liquid hydrogen inlet pipe 4 feeds liquefied gas at around -250°C and at a relatively low pressures of 3 to 6 bar to the second vessel 2. The second vessel 2 is preferably a thin steel wall container. Alternatively aluminum or carbon fiber material can also be used. The second vessel 2 is preferably located inside the first tank 1 which is the compressed hydrogen tank. The outer wall 13 of the second vessel 2 is thermally isolated from the outer wall 14 of the first tank 1. After the liquid totally evaporates both vessels 1, 2 contain the high pressure compressed gaseous medium.

The second vessel 2 has at least one fluid conduit 8 to release hydrogen gas evaporated from the liquid from the second vessel 2 into the first vessel 1. The fluid conduit 8 can be a syphon-like outlet to transfer the liquid medium from the second vessel 2 into the first vessel 1.

In a preferred embodiment of the invention the outer wall 13 of the second vessel 2 has openings 8.1, 8.2, ... in its top region 9 to allow evaporated hydrogen to fill the first vessel 1. The second vessel 2 is surrounded with several thermal screen layers 7a, 7b, ..., preferably metal shields, in order to slow down the process of liquid hydrogen evaporation and to protect the first vessel wall 14 from being exposed to the extreme temperature difference between inner and outer vessel surface, which would be dangerous for the reinforcement wrapping material 12 which surrounds the outer wall 14 of the first vessel 1.

The perforation holes 8.1, 8.2, ... in the thermal screen layers should be staggered so that the thermal radiation shields means 7a, 7b, ... are optically tight so that heating of the liquid hydrogen by direct thermal radiation from the outer walls 14 of vessel 1 which are at ambient temperature can be avoided.

The thermal screen layers can be made of any reflective material such as Mylar foil (polyethylene terephthalat) with reflective coating.

Mountings 15 are located between the first and second vessel walls 13, 14 and between the thermal screen layers 7a, 7b, ... in order to stabilize the spacing between the components. Preferably the mountings 15 are made of thermally insulating material and/or honeycomb structure.

While filling the second vessel 2 with liquid hydrogen the liquid hydrogen outlet pipe 5 can provide a signal that the required volume of liquid hydrogen LM has been delivered. Alternatively a sensor responsive to the filling level can be located in the second vessel 2. The amount of liquid hydrogen LM corresponds to the amount of hydrogen which expands in the volume of first vessel 1 and second vessel 2 to working pressure after the system temperature stabilizes.

The thermal screen layers 7a, 7b, ... reduce the convection and radiation heat exchange rates between inner walls of the first vessel 1 and outer walls of the second vessel 2. The perforation holes 8.1, 8.2, ... in the thermal screen layers and in the wall of the second tank 2 allow sufficient gas expansion.

The total volume provided for containing said gaseous medium GM in the first vessel 1 including space between the screen 7a, 7b, ... and in the second vessel 2 is at least equal to the volume of the hydrogen necessary to contain the completely evaporated liquid hydrogen LM at a working pressure p_{w} of the gaseous medium.

The working pressure p_{w} for the first vessel 1 is well above 100 bar. The heater 3 evaporates all hydrogen from the second vessel 2 so that the pressure p_{w} can be established within the volume of the tank 10. Such a pressure can be several hundred bar, e.g. 350 up to 700 bar. Additionally the heater 3 can provide enough energy to keep the temperature of the wall 14 of the first vessel 1 well below a critical temperature in order to avoid damage due to exposure of the wall 14 to low temperatures.

To stabilize the temperature of the storage tank 10 an additional heater 11 can be located around the outer wall 14 of the first vessel 1. The heater 11 can also be used to increase the working pressure level in the tank 10 by heating up the wall 14 of the first vessel 1.

To support the evaporation of liquid hydrogen a heating means 3 is in thermal contact with the screens 7a, 7b and/or the outer wall 13 of the second vessel 2. The heating means 3 can be an electric heater heating an electric resistance via an electric current or another type of heater. The heater 3 can be provided on each single shield 7a, 7b, ... of the screen means 7 or only on one or selected screens 7a, 7b, ... of the screen means 7. The second vessel 2 receiving the liquid medium LM is not used to store the cryogenic meedium LM but to serve as a medium reservoir for the high-pressure gaseous medium GM. Preferably the liquid medium LM is evaporated shortly after being filled into the second vessel 2. The density of the medium, e.g. hydrogen, in the liquid phase is much higher than in the gas phase. Therefore, a large amount of medium can be transferred into the tank 10 in the liquid phase.

The heating means 3 and the additional heater 11 can be used together or separately based on thermal calculations of the given tank system. The number of thermal screens 7a, 7b, ... will depend on the design of the first vessel 1 or in other words on the acceptable temperature difference between the outer wall of the first vessel 1 and the outer surface of the reinforcement means 12.

Preferably the reinforcement material is carbon fiber. Alternatively the reinforcement material comprises steel.

The thermal screen layers 7a, 7b, ... and/or the mountings 15 can be alternatively replaced by a honeycomb structure.

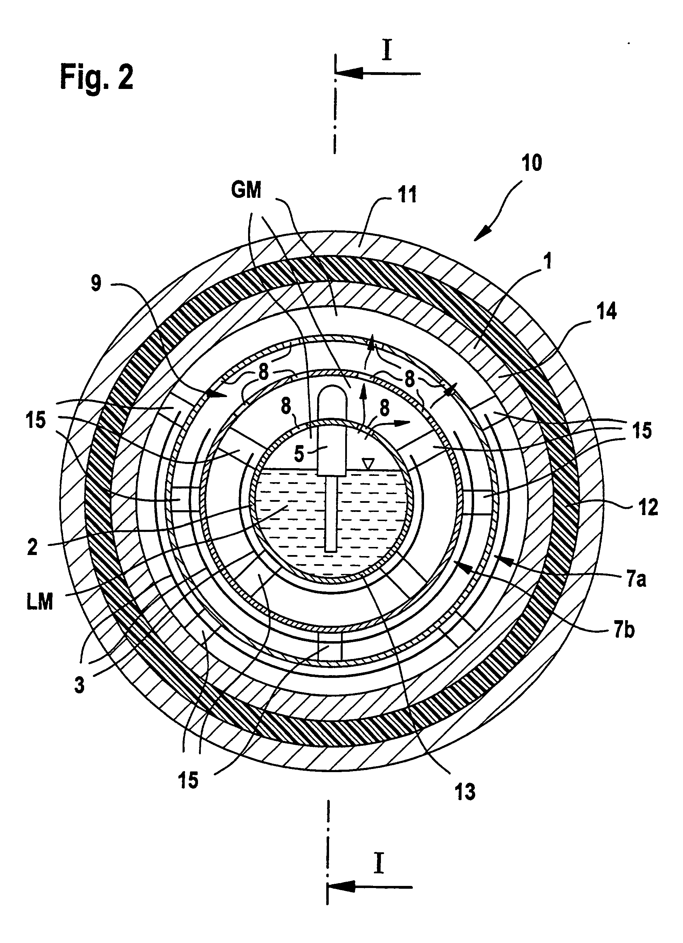

Fig. 2 shows a cross sectional view of the tank 10 according to fig. 1, shortly after fuelling liquid medium LM into the second vessel 2. Same elements as already described in fig. 1 are referred to with the same reference numbers.

The liquid medium LM is in contained the second vessel 2. Mountings 15 are located between the first and second vessel walls 13, 14 and between the thermal screen layers 7a, 7b, .... Gaseous medium GM evaporates from the liquid medium reservoir out of the vessel 2 through the perforation holes 8 into the vessel 1. For hydrogen the volume of the liquid medium LM is only about 1/1000 of the volume of the medium GM in the gas phase at ambient pressure.

Vehicles with those storage tanks 10 will be able to refuel at any filling station providing high pressure or liquid hydrogen. Cheaper and simpler filling stations can be used if a high-pressure tank system vehicle is fuelled with liquid hydrogen.

Advantageously the filling of a tank for high-pressure medium storage can be made faster as liquid medium lower pressure is required for refuelling a tank.

The storage tank according to the invention allows the possibility to avoid high pressure equipment to fill high pressure hydrogen tanks and saves costs and increases safety of such systems.

## Claims

1. A storage tank (10) for a medium with a first volume provided for containing a gaseous phase of said medium (GM) and a second volume provided for containing a liquid phase of said medium (LM), means (3) for heating said medium, inlet and outlet means (4, 5, 6) for said medium, wherein the first volume is inside a first vessel (1) and the second volume is inside a second vessel (2), wherein said second vessel (2) being in fluid connection with said first vessel (1) via at least one fluid conduit (8) and that said second vessel (2) is surrounded by said first vessel (1),
**characterized in**
**that** first inlet and outlet means (6) are provided for filling or discharging said gaseous medium (GM) into or out of said first vessel (1) and second inlet and outlet means (4, 5) are provided for filling or discharging said liquid medium (LM) into or out of said second vessel (2).

2. A storage tank according to claim 1,
**characterized in**
**that** said at least one fluid conduit (8) is located in the region (9) on top of said second vessel (2).

3. A storage tank according to claim 1,
**characterized in**
**that** thermal screen means (7) are arranged at least partially between said first and said second vessel (1, 2).

4. A storage tank according to claim 3,
**characterized in**
**that** said screen means (7) consist of mutiple shields (7a, 7b, ...) wherein a multiplicity of perforation holes (8.1, 8.2, ...) is provided in each shield (7a, 7b, ...) as said fluid conduit (8).

5. A storage tank according to claim 4,
**characterized in**
**that** said perforation holes (8.1, 8.2, ...) in neighbouring shields (7a, 7b, ...) are arranged in a staggered way so that said screen means (7) are optically tight.

6. A storage tank according to claim 1,
**characterized in**
**that** said inlet and outlet means (4, 5) for the liquid medium (LM) comprises concentrically arranged conduits.

7. A storage tank according to claim 1,
**characterized in**
**that** said inlet and outlet means (4, 5) for said liquid medium (LM) and said inlet and outlet means (6) for said gaseous medium (GM) are arranged at the same side of said storage tank (10).

8. A storage tank according to claim 1,
**characterized in**
**that** said outer wall (13) of second vessel (2) and/or at least one screen (7a, 7b, ...) are in thermal contact to said heating means (3).

9. A storage tank according to claim 1,
**characterized in**
**that** additional heating means (11) are arranged around said outer wall (14) of said first vessel (1).

10. A storage tank according to claim 1,
**characterized in**
**that** said outer wall (14) of said first vessel (1) is surrounded by reinforcement material (12).

11. A storage tank according to claim 1,
**characterized in**
**that** said second vessel (2) is made of steel and/or aluminum.

12. A storage tank according to claim 3,
**characterized in**
**that** said screen means (7) comprise reflective material.

13. A storage tank according to claim 1,
**characterized in**
**that** the volume provided for containing said gaseous medium (GM) in said first vessel (1) and in said second vessel (2) is at least equal to the volume of said medium necessary to contain the completely evaporated liquid medium (LM) at a working pressure (p_{w}) of said gaseous medium.

14. A storage tank according to claim 1,
**characterized in**
**that** said working pressure (p_{w}) of said gaseous medium is at least 100 bar.

15. Vehicle with a combustion engine where a storage tank (10) according to Claim 1 is provided to store the combustion fuel.

16. Vehicle with a fuel cell system where a storage tank (10) according to Claim 1 is provided to store the fuel for the fuel cell.

## Patentansprüche

1. Speicherbehälter (10) für ein Medium mit einem ersten Volumen, das dazu vorgesehen ist, eine gasförmige Phase des Mediums (GM) zu enthalten, und einem zweiten Volumen, das dazu vorgesehen ist, eine flüssige Phase des Mediums (LM) zu enthalten, Mitteln (3) zum Erwärmen des Mediums, Einlass- und Auslassmitteln (4, 5, 6) für das Medium, wobei sich das erste Volumen innerhalb eines ersten Gefäßes (1) befindet und sich das zweite Volumen innerhalb eines zweiten Gefäßes (2) befindet, wobei sich das zweite Gefäß (2) über mindestens einen Fluidkanal (8) in Fluidverbindung mit dem ersten Gefäß (1) befindet und das zweite Gefäß (2) von dem ersten Gefäß (1) umgeben ist,
**dadurch gekennzeichnet,**
**dass** erste Einlass- und Auslassmittel (6) vorgesehen sind, um das gasförmige Medium (GM) in das erste Gefäß (1) einzufüllen oder aus ihm abzulassen, und zweite Einlass- und Auslassmittel (4, 5) vorgesehen sind, um das flüssige Medium (LM) in das zweite Gefäß (2) einzufüllen oder aus ihm abzulassen.

2. Speicherbehälter nach Anspruch 1,
**dadurch gekennzeichnet,**
**dass** der mindestens eine Fluidkanal (8) in dem Bereich (9) an der Oberseite des zweiten Gefäßes (2) angeordnet ist.

3. Speicherbehälter nach Anspruch 1,
**dadurch gekennzeichnet,**
**dass** Wärmeabschirmungsmittel (7) mindestens teilweise zwischen dem ersten und dem zweiten Gefäß (1, 2) angeordnet sind.

4. Speicherbehälter nach Anspruch 3,
**dadurch gekennzeichnet,**
**dass** die Abschirmungsmittel (7) aus mehreren Schirmen (7a, 7b, ...) bestehen, wobei in jedem Schirm (7a, 7b, ...) eine Vielzahl von Perforationslöchern (8.1, 8.2, ...) als der Fluidkanal (8) vorgesehen ist.

5. Speicherbehälter nach Anspruch 4,
**dadurch gekennzeichnet,**
**dass** die Perforationslöcher (8.1, 8.2, ...) in einander benachbarten Schirmen (7a, 7b, ...) auf eine gegeneinander versetzte Weise angeordnet sind, so dass die Abschirmungsmittel (7) optisch dicht sind.

6. Speicherbehälter nach Anspruch 1,
**dadurch gekennzeichnet,**
**dass** die Einlass- und Auslassmittel (4, 5) für das flüssige Medium (LM) konzentrisch angeordnete
Kanäle aufweisen.

7. Speicherbehälter nach Anspruch 1,
**dadurch gekennzeichnet,**
**dass** die Einlass- und Auslassmittel (4, 5) für das flüssige Medium (LM) und die Einlass- und Auslassmittel (6) für das gasförmige Medium (GM) auf derselben Seite des Speicherbehälters (10) angeordnet sind.

8. Speicherbehälter nach Anspruch 1,
**dadurch gekennzeichnet,**
**dass** sich die Außenwand (13) des zweiten Gefäßes (2) und/oder mindestens ein Schirm (7a, 7b, ...) in thermischem Kontakt mit dem Erwärmungsmittel (3) befindet.

9. Speicherbehälter nach Anspruch 1,
**dadurch gekennzeichnet,**
**dass** zusätzliche Erwärmungsmittel (11) um die Außenwand (14) des ersten Gefäßes (1) herum angeordnet sind.

10. Speicherbehälter nach Anspruch 1,
**dadurch gekennzeichnet,**
**dass** die Außenwand (14) des ersten Gefäßes (1) von Verstärkungsmaterial (12) umgeben ist.

11. Speicherbehälter nach Anspruch 1,
**dadurch gekennzeichnet,**
**dass** das zweite Gefäß (2) aus Stahl und/oder Aluminium hergestellt ist.

12. Speicherbehälter nach Anspruch 3,
**dadurch gekennzeichnet,**
**dass** die Abschirmungsmittel (7) reflektierendes Material aufweisen.

13. Speicherbehälter nach Anspruch 1,
**dadurch gekennzeichnet,**
**dass** das Volumen, das zur Aufnahme des gasförmigen Mediums (GM) in dem ersten Gefäß (1) und in dem zweiten Gefäß (2) vorgesehen ist, mindestens gleich dem Volumen dieses Mediums ist, das erforderlich ist, um das vollständig verdampfte flüssige Medium (LM) bei einem Betriebsdruck (p_{w}) des gasförmigen Mediums aufzunehmen.

14. Speicherbehälter nach Anspruch 1,
**dadurch gekennzeichnet,**
**dass** der Betriebsdruck (p_{w}) des gasförmigen Mediums mindestens 100 bar beträgt.

15. Fahrzeug mit einem Verbrennungsmotor, wobei ein Speicherbehälter (10) nach Anspruch 1 vorgesehen ist, um den Brennstoff zu speichern.

16. Fahrzeug mit einem Brennstoffzellensystem, wobei ein Speicherbehälter (10) nach Anspruch 1 vorgesehen ist, um den Brennstoff für die Brennstoffzelle zu speichern.

## Revendications

1. Réservoir de stockage (10) pour un fluide, avec un premier volume prévu pour contenir une phase gazeuse dudit fluide (GM), et un second volume prévu pour contenir une phase liquide dudit fluide (LM), avec des moyens (3) pour chauffer ledit fluide, des moyens d'entrée et de sortie (4, 5, 6) pour ledit fluide, le premier volume se trouvant à l'intérieur d'une première cuve (1) et le second volume se trouvant à l'intérieur d'une seconde cuve (2), ladite seconde cuve (2) étant en connexion au niveau fluide avec ladite première cuve (1) via au moins un conduit à fluide (8) et ladite seconde cuve (2) étant entourée par ladite première cuve (1), **caractérisé en ce que** des premiers moyens d'entrée et de sortie (6) sont prévus pour remplir ou décharger ledit fluide gazeux (GM) dans, ou hors de ladite première cuve (1) et des seconds moyens d'entrée et de sortie (4, 5) sont prévus pour remplir ou décharger ledit fluide liquide (LM) dans, ou hors de ladite seconde cuve (2).

2. Réservoir de stockage selon la revendication 1, **caractérisé en ce qu'**au moins un conduit à fluide (8) est situé dans la région (9) au dessus de ladite seconde cuve (2).

3. Réservoir de stockage selon la revendication 1, **caractérisé en ce que** les moyens d'écran thermique (7) sont disposés au moins partiellement entre ladite première et ladite seconde cuve (1, 2).

4. Réservoir de stockage selon la revendication 3, **caractérisé en ce que** lesdits moyens d'écran thermique (7) consistent en de multiples boucliers (7a, 7b, ...), une multiplicité de trous de perforation (8.1, 8.2, ...) étant prévus dans chaque bouclier (7a, 7b, ...) en tant que dit conduit à fluide (8).

5. Réservoir de stockage selon la revendication 4, **caractérisé en ce que** lesdits trous de perforation (8.1, 8.2, ...) dans les boucliers avoisinants (7a, 7b, ...) sont disposés en quinconce de manière telle que lesdits moyens d'écran (7) sont optiquement étanches.

6. Réservoir de stockage selon la revendication 1, **caractérisé en ce que** lesdits moyens d'entrée et de sortie (4, 5) pour le fluide liquide (LM) comprennent des conduits disposés concentriquement.

7. Réservoir de stockage selon la revendication 1, **caractérisé en ce que** lesdits moyens d'entrée et de sortie (4, 5) pour ledit fluide liquide (LM) et lesdits moyens d'entrée et de sortie (6) pour ledit fluide gazeux (GM) sont disposés du même côté dudit réservoir de stockage (10).

8. Réservoir de stockage selon la revendication 1, **caractérisé en ce que** ladite paroi extérieure (13) de la seconde cuve (2) et/ou au moins un écran (7a, 7b, ...) sont en contact thermique avec lesdits moyens de chauffage (3).

9. Réservoir de stockage selon la revendication 1, **caractérisé en ce que** des moyens de chauffage additionnels (11) sont disposés autour de ladite paroi extérieure (14) de ladite première cuve (1).

10. Réservoir de stockage selon la revendication 1, **caractérisé en ce que** ladite paroi extérieure (14) de ladite première cuve (1) est entourée par un matériau de renfort (12).

11. Réservoir de stockage selon la revendication 1, **caractérisé en ce que** ladite seconde cuve (2) est faite en acier et/ou en aluminium.

12. Réservoir de stockage selon la revendication 3, **caractérisé en ce que** lesdits moyens d'écran (7) comprennent des matériaux réfléchissants.

13. Réservoir de stockage selon la revendication 1, **caractérisé en ce que** le volume prévu pour contenir ledit fluide gazeux (GM) dans ladite première cuve (1) et dans ladite seconde cuve (2) est au moins égal au volume dudit fluide nécessaire pour contenir le fluide liquide (LM) complètement évaporé à la pression de service (p_{w}) dudit fluide gazeux.

14. Réservoir de stockage selon la revendication 1, **caractérisé en ce que** ladite pression de service (p_{w}) dudit fluide gazeux est au moins 100 bar.

15. Véhicule avec un moteur à combustion, dans lequel un réservoir de stockage (10) selon la revendication 1 est prévu pour stocker le carburant de combustion.

16. Véhicule avec un système à pile à combustible, dans lequel un réservoir de stockage (10) selon la revendication 1 est prévu pour stocker le carburant pour la pile à combustible.
